# EUROPEAN PATENT SPECIFICATION

(11) **EP 1 877 536 B1**
(45) Date of publication and mention of the grant of the patent: **16.02.2011**
(21) Application number: 06752118.7
(22) Date of filing: 03.05.2006
(51) Int. Cl.: A01C 15/00, B67D 7/80

(54) **IMPROVED SYSTEM AND METHOD FOR DISPENSING DEHYDRATED CULTURE MEDIA POWDER**
VERBESSERTES SYSTEM UND VERFAHREN ZUR ABGABE VON DEHYDRATISIERTEM KULTURMEDIUMPULVER
SYSTEME ET PROCEDE AMELIORES DE DISTRIBUTION D'UN MILIEU DE CULTURE DESHYDRATES EN POUDRE

(30) Priority: 03.05.2005 US 119912; 03.05.2005 US 119792; 01.11.2005 US 732774 P
(43) Date of publication of application: 16.01.2008
(73) Proprietor: Mediatek, LLC, Frederick, MD 21704-8322 (US)
(72) Inventor: HOUSE, Arthur G., Chevy Chase, Maryland 20815 (US); KLINK, Kevin P., Middletown, Maryland 21769 (US); RICHMAN, William J., Frederick, Maryland 21702 (US)
(74) Representative: Perkins, Sarah
(86) International application number: PCT/US2006/016896
(87) International publication number: WO 2006/119324

(56) References cited:
- GB-A- 2 187 373
- US-A- 5 000 314
- US-A- 5 385 403
- US-A1- 2004 026 452
- US-A1- 2004 155 069

## Description

This application claims benefit from provisional Application No. 60/732,774 filed on November 1, 2005, the entire content being incorporated herein by reference.

### CROSS-REFERENCE TO RELATED APPLICATIONS

Related subject matter is disclosed in U.S. Application No. 11/119,912, filed May 3, 2005, and in U.S. Application No. 11/119,792, filed on May 3, 2005, the entire content of each being incorporated herein by reference.

### BACKGROUND OF THE INVENTION

### Field of the Invention:

The present invention provides an improved system and method for dispensing dehydrated culture media (DCM) powder into containers for preparation of culture media. More particularly, the present invention relates to improved manual and automated systems and methods for dispensing DCM powder into vessels or media preparation instruments in a sanitary manner to avoid contamination by DCM powder dust to the surrounding area.

### Description of the Related Art:

Microbiology laboratories are required to produce large quantities of agar based growth media to use in the growth of bacteria and other microorganisms. Regardless of the specific agar media formulation used, most media are prepared by mixing powdered dehydrated culture media (DCM) with water and then sterilizing the mixture in an autoclave to insure the growth media is free of contamination. The dehydrated media powder, which is ground very fine, is typically delivered to the laboratory in plastic containers of varying sizes. A laboratory technician will typically scoop or pour out and weigh the required amount of DCM powder, add the appropriate amount of water, and mix and warm the mixture using, for example, a magnetic stirring motor with stir bar. Once the DCM and water have been completely mixed, the mixture is sterilized by autoclave or media preparator.

As used in most laboratories, DCM is a very light and fine powder. Some DCM formulations are highly toxic and all are irritants to some degree. When poured, DCM often forms a cloud of dust that rises above and around the technician who is dispensing the powder. This "media cloud" or "dusting" causes several problems. Often the technician will inhale DCM dust, which can be a health hazard. Additionally, as the dust settles it leaves a film of agar on surrounding laboratory surfaces. Because DCM typically is used in areas that tend to be warm and moist due to the close proximity of steam-producing autoclaves, the media dust leaves a sticky film that is difficult to clean and that increases the likelihood of surface contamination. Moreover, because the DCM is a fine powder, it tends to penetrate into very small spaces in the laboratory, including the inside surfaces of scientific instruments where the resulting film can cause damage and excess wear over time.

Another problem is that the process of dispensing DCM is time consuming since a precise quantity should first be weighed prior to adding water. A further problem is that mixing large batches of DCM with water, e.g., batches of certain types of media larger than 10 liters, often requires DCM and water to be added alternately in limited quantities each time to avoid clumping of the media. This increases the time needed to create the media, contributes to inaccuracies and errors and increases the likelihood of DCM dusting. A further problem is that technicians sometimes are imprecise in their measurements of DCM or water. It is also important for technicians to be able to readily identify different containers including different types of media cultures without close inspection, to thus increase the efficiency of the dispensing process.
[0006A] US patent number 5,000,314 describes a cylindrical unit dose package, which is useable with a bottle to reconstruct the contents of the package.
[0006B] US patent publication number 2004/0155069 describes a powder measure-dispensing cap with a first end face for engagement with a powder container and a second end face having an opening for dispensing a measure of a powder.

Accordingly, a need exists for an improved system and method for dispensing DCM in a sanitary manner to avoid contamination to surrounding areas and minimize exposure to technicians and other personnel.

### SUMMARY OF THE INVENTION

The present invention is set out in the appended claims. An embodiment of the present invention provides an automated or manual system for delivering DCM powder to a preparation instrument or a container in a sanitary manner to prevent media dusting by eliminating or substantially reducing the formation of the DCM media cloud during the preparation process. An embodiment of the present invention further provides a method for a convenient, rapid, exact and reproducible dispensing of DCM into either flasks or automated media sterilizers or other instruments.

The embodiments of the present invention further are capable of dispensing an appropriate amount of water or liquid into a media sterilizer or other instrument or container while simultaneously dispensing DCM powder in the proper amount and in a manner so as to avoid clumping. The metering device can be programmable to dispense the appropriate admixture of water and DCM depending on the concentration desired. The embodiments of the present invention are also able to prevent or minimize laboratory errors by applying color coding or other identification indicia to the DCM containers to indicate specific media formulations, thereby reducing the likelihood that the incorrect DCM formulation will be used by a technician.

The embodiments of the present invention further provide a system comprising a carousel arrangement that permits dispensing of DCM powder from multiple containers at multiple volumes and rates. The embodiments of the present invention also provide a DCM container that is equipped with a device, such as an auger, that can facilitate measured dispensing of DCM powder automatically or manually into a flask, automated media sterilizers or other instruments.

### BRIEF DESCRIPTION OF THE DRAWINGS

These and other objects, advantages and novel features of the invention will be more readily appreciated from the following detailed description when read in conjunction with the accompanying drawings, in which:

FIG. 1 is a conceptual block diagram illustrating an example of an automated system for dispensing DCM powder into a media preparation instrument according to an embodiment of the present invention;

FIG. 2 is an example of a container which stores the DCM powder according to an embodiment of the present invention;

FIG. 3 is a top view of the container as shown in FIG. 2;

FIG. 4 illustrates an example of an adapter according to an embodiment of the present invention, that can be used with the container shown in FIG. 2;

FIG. 5 is a detailed top view of the portion of the motorized valve assembly of the system shown in FIG. 1 that receives the mouth of the DCM container according to the embodiment of the present invention;

FIG. 6 illustrates an example of the features of the rotatable valve of the valve assembly shown in FIG. 1 for dispensing the DCM powder in a measured fashion according to an embodiment of the present invention;

FIG. 7 illustrates an example of another system for dispensing DCM powder into a flask in a measured manner according to another embodiment of the present invention;

FIG. 8 is a perspective view illustrating an example of a carousel system for dispensing DCM powder not in accordance with the present invention;

FIG. 9 is a top view of the carousel system shown in FIG. 8;

FIG. 10 is a detailed view of an example of a relationship between a DCM powder container, dispensing cylinder, flask and related components of the carousel system shown in FIG. 8;

FIG. 11 is a more detailed view of an example of a relationship between a DCM powder container, dispensing cylinder, flask and related components of the carousel system shown in FIG. 8;

FIGS. 12A-12C are side views illustrating examples of different shapes of the dispensing cylinder used in the carousel arrangement shown in FIG. 8;

FIG. 13 is a side view illustrating a modification to the carousel arrangement shown in FIG. 8 not in accordance with the present invention;

FIG. 14 is a perspective view of a DCM container not in accordance with the present invention;

FIG. 15 is a side view of the DCM container shown in FIG. 14;

FIG. 16 is a top view of the DCM container shown in FIG. 14;

FIG. 17 is a bottom view of the DCM container shown in FIG. 14; and

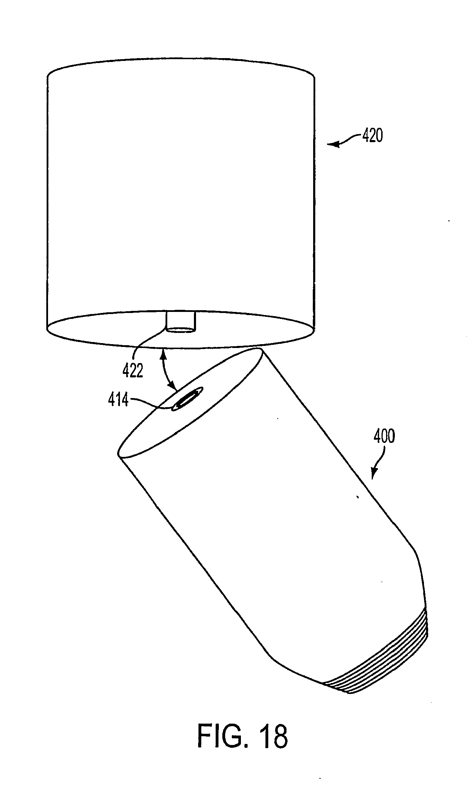

FIG. 18 illustrates an example of the DCM container mating with a motor not in accordance with the present invention.

### DETAILED DESCRIPTION OF THE PREFERRED EMBODIMENTS

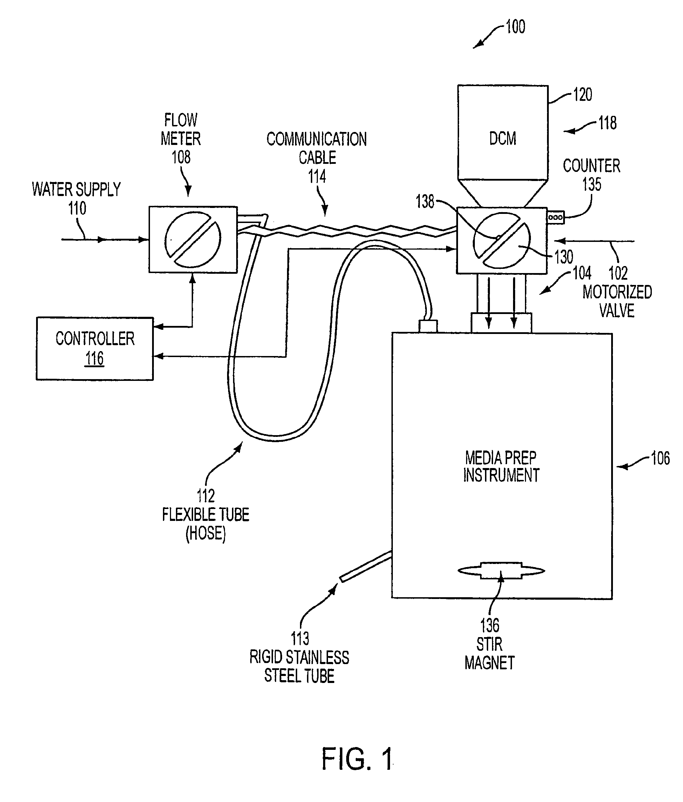

FIG. 1 illustrates an automated system 100 for dispensing DCM powder according to an embodiment of the present invention. As illustrated, the automated system 100 includes a motorized valve assembly 102 that is connected via a conduit 104 to a media preparation instrument 106. The media preparation instrument can be any type of instrument such as the MediaPrep line from Systec Gmbh, Wettenberg, Germany, Masterclave line from AES Laboratoire, Rennes, France, or MediaClave line from Integra Biosciences, Chur, Switzerland, each of which are commercially available.

As further illustrated, the system further includes a flow meter 108. The flow meter is electronically controlled with a digital or analog input and output for communication with a secondary device used to inject the DCM powder into the system. The flow meter can work on the basis of peristaltic action or other common commercial methodologies such as magnetic, ultrasonic, positive displacement or differential pressure. The flow meter instrument can be any type of instrument such as the AES PM05 from AES Laoratoire, Rennes, France, or the Perimatic GP or Perimatic Premier from Jencons Scientific, Inc., Bridgeville, Pennsylvania, that is connected to a water supply 110 or other liquid supply and provides water or other liquid to the media preparation instrument 106 in a regulated manner via flexible tube 112 as discussed in more detail below. The tube 112 is connected to a rigid tube 113 made of, for example, stainless steel or any other suitable material, and which extends near the bottom of the interior of the media preparation instrument 106 to minimize clumping of the DCM powder 120 and to improve mixing. The rigid tube 113 allows water to be added below the surface line of the DCM mixture to prevent or decrease the incidence of splashing or bubbling to prevent or substantially prevent, or at least minimize, the contact of water with the media entry port. A flexible tube may be utilized in place of the rigid tube 113; provided such flexible tube is configured so as to prevent or decrease the incidence of splashing or bubbling in the media preparation device. In practice, the tube 113 can be of any suitable material, such as rigid plastic, flexible plastic, bendable metal, a flexible hose, and so on, as long as it is positioned to prevent or substantially prevent the incidence of splashing or bubbling and its opening is at a sufficient distance from the media entry port. The motorized valve assembly 102 and flow meter 108 are connected by a communication cable 114 so that the rate at which the DCM powder is dispensed by the motorized valve 102 is coordinated with the rate at which liquid is dispensed into the media preparation instrument 106 by the flow meter 108 under the control of a controller 116, which can be a processor or any type of computer as can be appreciated by one skilled in the art. The controller 116 can be programmable by the technician or other suitable personnel as desired and with ease to control the desired dispensing rate of the DCM powder and liquid as discussed in more detail below. As further illustrated, the motorized valve 102 receives a container 118 in which the DCM powder is stored.

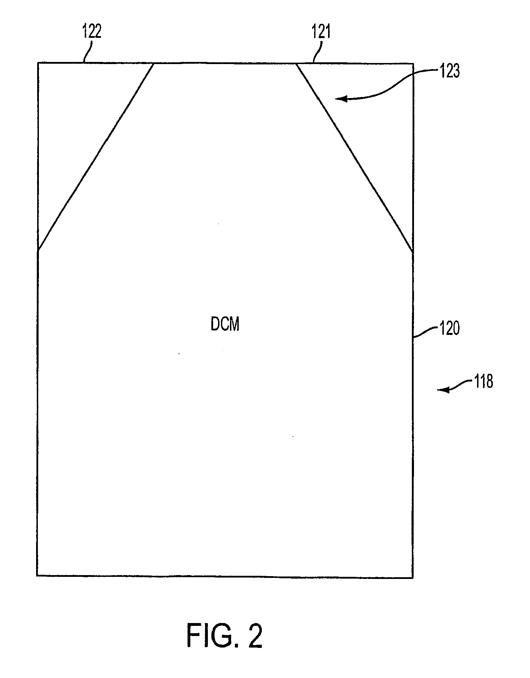

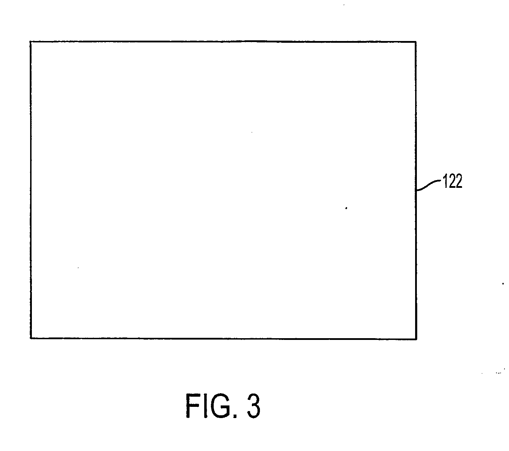

An example of a container for storing the DCM powder is shown in FIG. 2. In particular, the container 118 includes a container portion 120 and a cap 122. The container portion 120 is shaped in the form of a rectangle or square having flat or substantially flat sides as shown in FIG. 2 and in the top view of FIG. 3. As further illustrated in FIG. 3, the cap 122 is square shaped and has a flat or substantially flat top surface to allow the containers to be stacked vertically. The width and length of the cap 122 can correspond to the width and length of the container portion 120 as shown, or can be less than or greater than the width and length of the container portion 120, as deemed suitable for storage and stacking purposes.

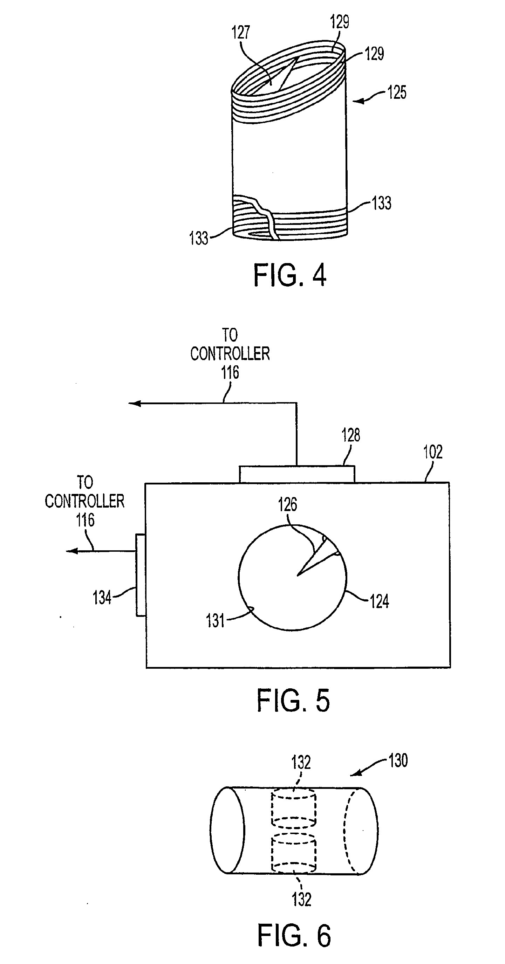

In addition, for identification purposes, the container portion 120 and the cap 122 can be coded with a color or other indicator representing the contents of the container 118. For instance, this identification can be a color coding (e.g., red, green, blue, etc.) that is present on portions or the entirety of the container portion 120 and cap 122, a type of indicia (e.g., numbers, letters or alphanumeric symbols) on the container portion 120 and cap 122 representing the content of the container, and/or a bar code representing the content of the container 118. Various safety warnings and other relevant information can also be present on the container portion 120, cap 122 or both. Also, the container portion 120 and cap 122 can be made of any suitable material, such as plastic or various polymers, and can be opaque, or can be translucent so that a technician can readily determine the amount of DCM powder remaining in the container. Furthermore, the mouth of the container portion 120 is tapered or conical in shape so as to allow the DCM powder to readily flow from the container portion 120 when the container portion 120 is set in an upside down position with the cap 122 removed, and includes threads 121 as indicated. The mouth of the container portion 120 and the cap 122 can have threads 123 so that the cap 122 can be screwed onto exterior threads on the container portion 120. The container portion 120 can also be configured to include threads 121 on its interior wall near its opening. In this event, the container portion 120 can be screwed onto the motorized valve assembly 102 of FIG. 1 or the valve assembly 146 of FIG. 6, or directly onto the inlet of the media preparation instrument 106, regardless of whether the motorized valve assembly 102, valve assembly 146 or the inlet of the media preparation instrument 106, has interior or exterior threads. Alternatively, the cap 122 can be snap-fit onto the container portion 120, and the container portion 120 can simply be placed in an inverted manner so that its opening is received into the opening in the motorized valve assembly 102, valve assembly 146 or the inlet of the media preparation instrument 106.

In addition, it should be noted that the container portion 120 can have a volume that contains a pre-measured, pre-packaged quantity of DCM powder for a single-use, so that the container 118 can be discarded after its DCM powder contents has been dispensed as discussed in more detail below. It should be further noted that the container 118 can alternatively be configured as a burstable pouch or bag, for example, that contains a pre-measured, pre-packaged amount that can be dispensed directly into the media preparation instrument 106, into the media preparation instrument 106 via an adapter 125 as shown in FIG. 4, or into the motorized valve assembly 102 when pressure is applied to the container portion 120 to burst the container 120, and then the container portion 120 can be discarded. Concerning the adapter 125, as indicated in FIG. 4, the adapter 125 can be shaped at an angle, or can include a lancet 127, such that when the container portion 120 is mated with the adapter 125, the lancet 127 or angled portion of the adapter 125 pierces a membrane (e.g., a rupturable membrane) present at the mouth of the container portion 120. Furthermore, the adapter can have threads 129 that mate with the threads 123 on the outside of the container portion 120 so that the container portion 120 can be screwed onto the adapter 125. It is further noted that the threads 123 can also be present on the outside of the adapter 125 as indicated, to mate with interior threads of the container portion 120 should such an arrangement be necessary. The other end of the adapter 125 can include threads 133 that can be on the exterior surface of the adapter 125, the interior surface of the adapter 125 (as indicated by the breakaway section), or both, to allow the adapter 125 to mate with the motorized valve assembly 102, valve assembly 146 or the inlet of the media preparation instrument 106, regardless of whether the threads of the valves 102 or 146, or at the inlet of the media preparation instrument 106, are exterior or interior.

An example of the operation of the automated system 100 will now be described with reference to FIG. 1. As indicated, the cap 122 is removed from the container 118 and the container portion 120 is placed in an upside-down vertical or substantially vertical position on the top of the motorized valve assembly 102. As shown in FIG. 5, the mouth 124 of the motorized valve assembly 102 can have a lancet 126 or other suitable puncturing mechanism for puncturing any membrane (e.g., a rupturable membrane) that may be present at the mouth of the container portion 120, so that the DCM powder can be gravity-fed into the motorized valve assembly 102. The inner surface of the mouth 124 of the motorized valve assembly 102 can also include threads 131 that can mate with the threads 123 at the outside mouth of the container portion 120 as the container portion 120 is mated with the motorized valve assembly 102. Alternatively, the mouth of the container portion 120 can simply mate with the mouth 124 of the motorized valve assembly 102 in any suitable manner. As noted above, the adapter 125 can be used to couple the container portion 120 to the mouth 124 of the motorized valve assembly 102. In this regard, the adapter can have threads 133 that mate with the threads 131 on the inner surface of the mouth 124 of the motorized valve assembly 102. In any event, the mating of the container portion 120 and the mouth 124 of the motorized valve assembly 102, either directly or via the adapter 125, as well as the mating of the container portion 120 with the media preparation instrument 106 directly or via the adapter 125, form a closed or substantially closed system that eliminates or at least substantially eliminates DCM dust formation outside of the media preparation instrument 106. The mouth 124 of the motorized valve assembly 102 can alternatively be configured to mate with a container 118 that is configured as a burstable pouch or bag as discussed above, either directly or via the adapter 125 in any of the manners described above, so that when pressure is applied to the container portion 120, the pre-measured amount of DCM powder is dispensed into the motorized valve assembly 102 while maintaining the closed system to eliminate or at least substantially eliminate DCM dusting, and then the container portion 120 and cap 122 can be discarded.

As further illustrated in FIG. 5, the motorized valve assembly 102 can include a motor 128, such as a DC servo motor, a stepper motor, or any other suitable motor, that can be controlled by the controller 116 to rotate a rotatable valve 130 of the motorized valve assembly 102 that is shown in FIG. 1 and in more detail in FIG. 6. As indicated, the rotatable valve 130 includes wells 132 having a volume corresponding to a desired volume or mass of DCM powder (e.g., 15 grams) that is to be dispensed into the media preparation instrument 106. That is, the rotatable valve 130 is rotated at a desired rate as controlled by the controller 116 to periodically dispense the appropriate amount of DCM powder into the media preparation instrument 106 via the conduit 104. In addition, as the rotatable valve 130 is being rotated under the control of the controller 116, the flow meter 108 is controlled by the controller 116 to dispense an appropriate amount of liquid into the medium preparation assembly 106 via the tube 112. The ratio of dehydrated media to liquid is user controllable. For example, in a 100 liter preparation, one-fifth of the total DCM to be solubilized is added with every 20 liters of water. The user is able to define any ratio of total DCM to water, e.g., ¼ DCM combined incrementally with ¼ water or 1/3 DCM combined incrementally with 1/3 water. Accordingly, the rotatable valve 130 can be rotated more rapidly to dispense the DCM powder into the media preparation instrument 106 at a faster rate, while the controller 116 can proportionately control the flow meter 108 to increase the flow of liquid into the media preparation instrument 106. The motorized valve assembly 102 can further include a counter 135, such as a mechanical or digital counter as known in the art, that counts the number of rotations of the rotatable valve 130, and can be automatically or manually reset to zero after the desired amount of DCM powder has been dispensed.

It should be also noted that the rotatable valve 130 can be removed and replaced with another rotatable valve having wells of a different volume which thus feed a greater amount or lesser amount of DCM powder into the media preparation instrument 106 per each rotation. Furthermore, as shown in FIG. 5, the motorized valve assembly 102 can include an agitator 134, such as a vibrating coil or any other suitable component, to shake or vibrate the motorized valve assembly 102 to allow the DCM powder to more freely flow through the motorized valve assembly 102 and conduit 104 into the media preparation instrument 106.

It should also be noted that the rotatable valve 130 can include a handle 138 that can be turned manually if is desired to operate the rotatable valve 130 manually. The flow meter 108 can also be operated manually if desired. As further indicated, the media preparation instrument 106 includes a stirrer magnet 136 as known in the art which can provide further stirring and agitation of the powder and liquid mixture in the media preparation instrument 106. It can be further noted that the controller 116 can be connected by any suitable means to the controller (not shown) of the media preparation instrument 106 to increase or decrease the rate of stirring by the stirring magnet 138 depending on the rate of deposit of DCM powder and liquid by the motorized valve assembly 102 and flow meter 108. Accordingly, this system 100 allows for the accurate dispensing of DCM powder and liquid into the media preparation instrument 106 in a clean and sanitary manner, with little or no waste of the DCM powder, minimal contamination of the surrounding areas due to dusting, and minimal exposure to the lab technician and other personnel due to dusting.

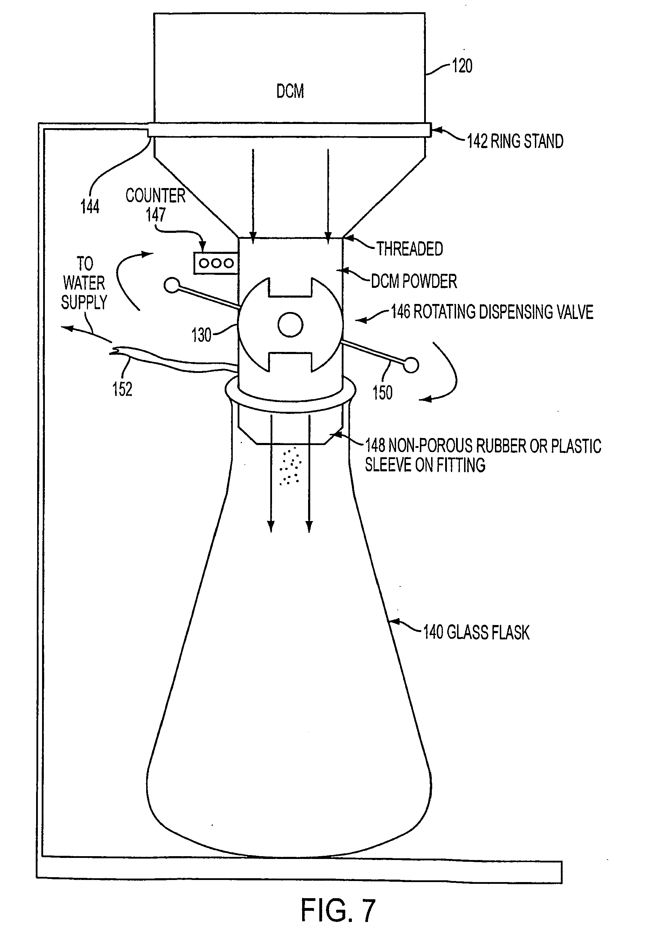

Although FIG. 1 and its related figures illustrate an automated system 100 for dispensing DCM powder into a media preparation instrument 106, the automated system 100, or a manual system, can be used to dispense the powder into another vessel or flask 140, such as an Erlenmeyer flask, as illustrated in FIG. 7. As indicated in FIG. 7, the system includes a ring stand 142 having a support 144 for supporting the container portion 120 in an upside down vertical or substantially vertical manner so that the DCM powder can flow by gravity into the valve assembly 146. The valve assembly 146 can include threads that mate with threads 123 on the outside of the mouth of the container portion 120, or the container portion 120 can simply be received into an opening in the valve assembly 146. Alternatively, the container portion 120 can be mated with the valve assembly 146 via the adapter 125 in the manner discussed above with regard to the motorized valve assembly 102, so as to form a closed or substantially closed system. Accordingly, the mating of the container portion 120 and the valve assembly 146, either directly or via the adapter 125, form a closed or substantially closed system that eliminates or at least substantially eliminates DCM dust formation outside of the vessel 140. The valve assembly 146 can alternatively be configured to mate, either directly or via the adapter 125, with a container 118 that is configured as a burstable pouch or bag as discussed above, so that when pressure is applied to the container 118, the pre-measured amount of DCM powder is dispensed into the valve assembly 146 when pressure is applied to the container 118 while maintaining the closed or substantially closed system to eliminate or at least substantially eliminate DCM dusting, and then the container 118 can be discarded. Furthermore, as can be appreciated from the above, the vessel 140 can be configured to mate with any of the types of container portion 120 directly or via the adapter 125 without using the valve assembly 146, and can have threads that mate with the threads 129 on the adapter 125 to facilitate the mating.

Also, the mouth of the valve assembly 146 can include a lancet similar to lancet 126 (see FIG. 5) to puncture any sealable membrane covering the mouth of the container portion 120. The valve assembly 146 further can be configured similar to the automated valve assembly 102, or can be configured solely as a manual valve assembly in which a user such as lab technician rotates the rotatable valve 130 of the valve assembly 146 by turning a knob 150 or by any other suitable mechanism. As with the motorized valve assembly 102, the rotatable valve 130 of the valve assembly 146 can be removed and replaced with a rotatable valve having different size wells to dispense a different amount of DCM powder into the flask 142 per each rotation. The valve assembly 146 can further include a counter 147, such as a mechanical or digital counter as known in the art, that counts the number of rotations of the rotatable valve 130, and can be automatically or manually reset to zero after the desired amount of DCM powder has been dispensed.

As further shown, the valve assembly 146 can include a non-porous rubber or plastic sleeve 148 to allow for mating with the mouth of the flask 142. Furthermore, the valve assembly 146 or the sleeve 148 can include an inlet tube 152 to allow water or other liquid to be manually or automatically fed into the flask 142 as the rotatable valve 148 is being manually or automatically rotated. The valve assembly 146 and the system in general can be automatically or manually agitated to allow the DCM powder to more freely fall into the valve assembly 146, and thus more freely into the flask 142. Accordingly, the system shown in FIG. 7 also provides an efficient and sanitary system for dispensing DCM powder into a container while avoiding waste and contamination of the surrounding area due to dusting and exposure to DCM powder inhalation due to dusting.

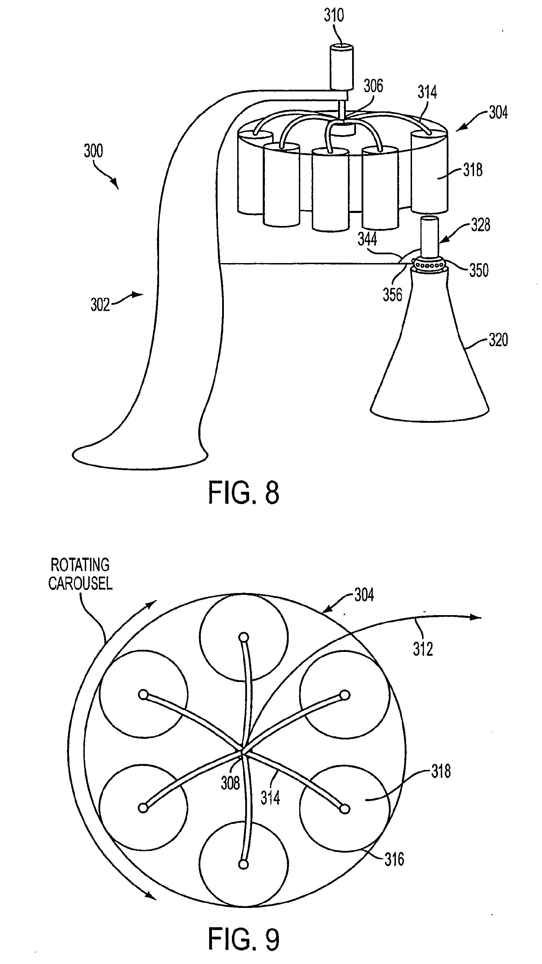

In FIGS. 8-12, an example of a system for dispensing DCM powder configured as a laboratory benchtop system 300 not in accordance with the invention is shown. The system 300 allows for the predictable, accurate and reproducible preparation of culture media from DCM and has as a principal benefit the avoidance of DCM dust formation associated with culture media preparation otherwise encountered in laboratory practice.

The system 300 comprises a carousel stand 302 and a rotatable carousel 304. The carousel stand 302 and the rotatable carousel 304 can be made of plastic, metal, composite or any suitable material. The rotatable carousel 304 is coupled to the carousel stand 302 by a coupler 306 that couples to a pivot point 308 of the carousel stand 302 and can include any suitable rotating mechanism that enables the rotatable carousel 304 to rotate about 360 degrees with respect to the pivot point 308. The rotatable carousel 304 can be rotated manually, or the system 300 can further include a motor 310 that can automatically rotate the rotatable carousel 304 as desired under control of, for example, a computer (not shown).

Furthermore, the coupler 306 can have a chamber therein that is in communication with a main air hose 312 and a plurality of secondary air hoses 314 as shown. The main air hose 312 connects to a compressed air source (not shown), and the number of secondary air hoses 314 can, for example, correspond to the number of openings 316 in the rotatable carousel 304 that are each adapted to receive a DCM container 318 as discussed in more detail below. The coupler 306 therefore distributes the compressed air from the main air hose 312 to the secondary air hoses 314.

Specifically, as shown in FIG. 8, the rotatable carousel 304 is capable of holding one or more disposable containers 318 of various types of dehydrated culture media (DCM), that allows a user to select the type of DCM desired for use by rotating the desired container into position over the flask 320 into which the DCM will be deposited. The disposable containers 318 can be similar to the container portion 120 as discussed above, and are shaped so as to be suitable for stacking on their sides. The surfaces of the rotatable carousel 304 defining the openings 316 can each include mating grooves (not shown) that can mate with grooves on the exterior of a disposable container 318. Alternatively, the openings 316 can be shaped similarly to the outer shape of the disposable containers 318 so that the disposable containers can be snap fit into the openings 316. The different disposable containers 318 can include different types of DCM powder or, for that matter, different types of materials altogether. The disposable containers 318 may be color coded to simplify the identification of the type of DCM power or other material to be used and to avoid mistakes by laboratory personnel.

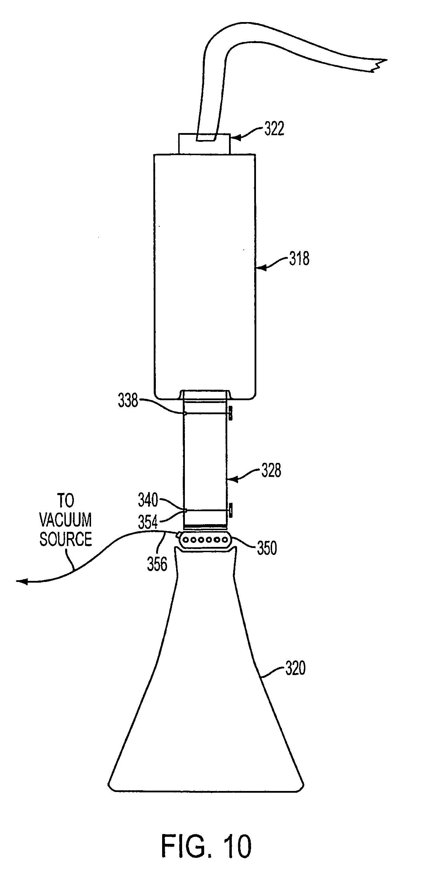

As shown in more detail in FIG. 10, each of the secondary air hoses 314 can mate with the top of a respective disposable container 318 so that compressed air can be fed into the disposable container 318 to force out the DCM powder. Specifically, each secondary air hose 314 can include a connector 322 that can snap fit, screw into or otherwise mate with an opening 324 in the disposable container 318. The connector 322 alternatively can include a lance (not shown) that can pierce into the top of the disposable container 318 and thereby secure the secondary air hose 314 to the disposable container 318. Alternatively, the connector 322 can be present at the top of the disposable container 318 and can be configured to receive an end of the secondary air hose 314 to thus couple the secondary air hose 314 to the disposable container 318. As can be appreciated by one skilled the art, regardless of the manner in which the connector 322 is configured, the connector 322 can include a one-way valve (not shown) that permits air from the secondary air hose 314 to enter the disposable container 318 but does not permit the contents of the disposable container 318 to exit the disposable container if, for example, a negative pressure is inadvertently applied to the secondary air hose 314. The valve can be operated automatically or manually.

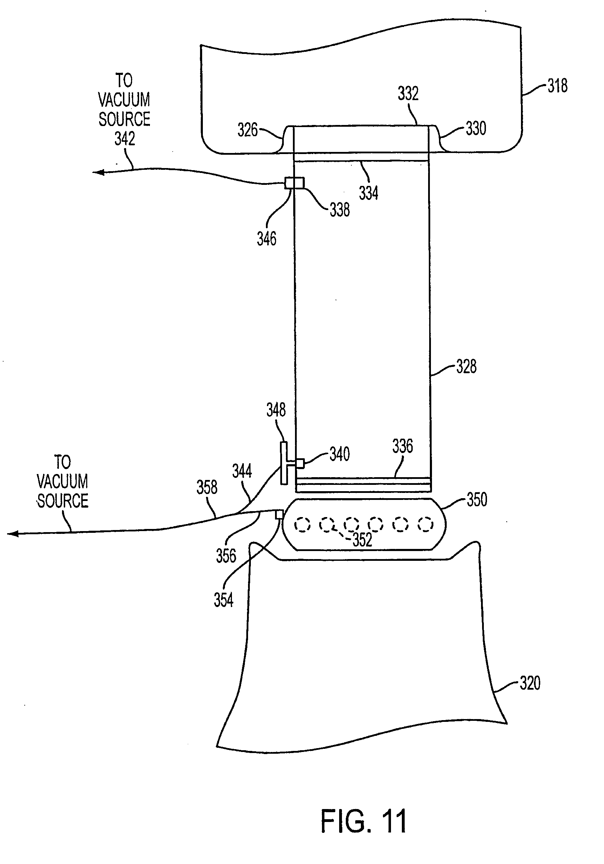

As further shown in FIG. 10 and a shown in more detail in FIG. 11, the bottom of the disposable container 318 can include an opening 326 that can mate with a tube 328 either by screwing, snap fitting or in any other suitable manner. Specifically, the surface of the disposable container 318 defining the opening 326 can include threads 330 that mate with threads 332 on the tube 328. Alternatively, one end of the tube 328 can include a lance (not shown) that can pierce into the disposable container 318 and thus secure the tube 328 to the disposable container 318.

The tube 328 further includes valves 334 and 336 positioned proximate to each end as illustrated. These values 334 and 336 can be membrane-type valves, or any suitable type of one-way valves that allow the contents of the disposable container 318 to enter and pass through the tube 328 in one direction (i.e., downward in FIG. 10). The valves 334 and 336 can be operated automatically or manually.

Is should be noted that the tube 328 has dimensions to accommodate a desired volume of DCM powder. For example, the cylindrically shaped tube 328 can have dimensions to accommodate 15 grams of DCM powder. The tube 328 can be configured differently to accommodate different volumes of DCM powder as discussed in more detail below.

As further shown in FIGS. 10 and 11, the tube 328 can include two side valves 338 and 340 that can allow air to pass through the value out of the tube 328 when the valves 338 and 340 are coupled to hoses 342 and 344 that are further coupled to a vacuum source (not shown). These valves 338 and 340 can further be coupled to filters 346 and 348 which couple to the hoses 342 and 344 and prevent DCM powder from exiting the tube 328 while allowing air to flow from the tube 328 into the hoses 342 and 344 when the vacuum is applied as discussed in more detail below.

FIGS. 10 and 11 also illustrate that a vacuum ring 350 can be coupled to one end of the tube 328 between the mouth of the flask 320 and the end of the tube 328. The vacuum ring 350 includes an opening 352 that permits DCM powder to pass from the tube 328 through the vacuum ring 350 and into the flask 320. The vacuum ring 350 further includes a plurality of interior openings 354 that communicate with the opening 352, and a hollow tap 354 to which a hose 356 can be connected. The hollow tap 354 communicates with the interior openings 354. The hose 356 can be connected to the vacuum source either in conjunction with hose 344 via a Y-connection 358, or independently.

When positive air pressure is applied to the top of the disposable container 318 via the secondary air hose 314, and a negative pressure is applied to the bottom of the container via tube 328 when a vacuum is applied to the hoses 342, 344 and 356, the DCM power is drawn from the disposable container 318, through the tube 328, and into the flask 320 in a measured manner. The amount of air pressure and vacuum pressure can be adjusted accordingly to adjust the rate of flow of the DCM powder into the flask 320. The vacuum ring 350 evacuates any DCM powder dust that may rise up from the mouth of the flask 320 when the DCM powder is flowing into the flask 320, thus eliminating or substantially eliminating the dusting problem as described in the Background section above.

It should also be noted that the DCM powder can be emptied into the flask 320 in a very precise and measured manner. For example, using gravity, agitation, vibration and/or mixing, as well as the appropriate amount of positive air pressure applied to the contents of the DCM container via secondary air hose 314, and the appropriate amount of vacuum pressure applied via hoses 342, 344 and 356, the DCM can be drawn into the tube 328 while the valve 336 at the bottom of the tube 328 remains closed. Once the tube 328 is filled, the valve 336 can be automatically or manually opened to allow the appropriate amount of DCM powder to be dispensed into the flask 320. At this time, a positive air pressure can be applied to the cylinder 328 via hoses 342 and 344 to assist in expelling the DCM powder from the cylinder 328. It should be noted that in this arrangement, it is advantageous for the vacuum ring 350 to be independently coupled to the vacuum source via hose 356 so that a vacuum can be applied to the vacuum ring 350 to suction away any DCM dust that may develop while the air pressure is being applied via hoses 342 and 344.

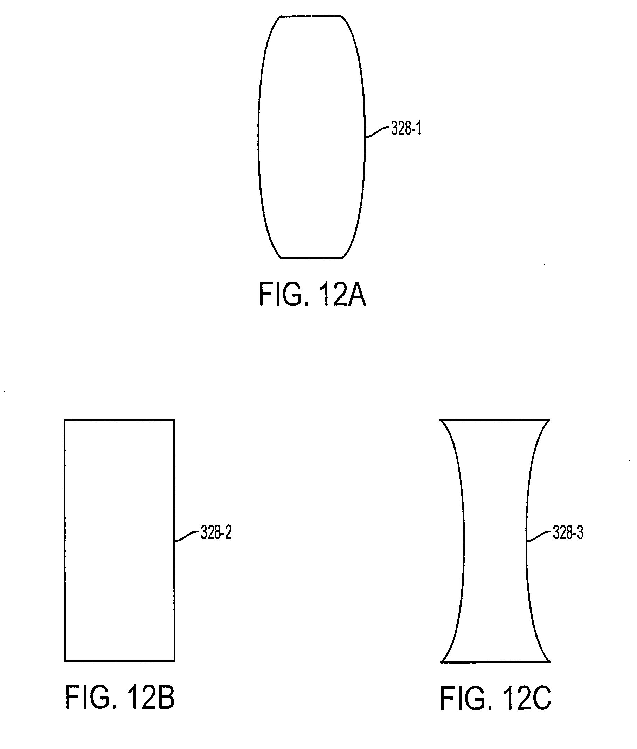

It is also desirable to use cylinder 328 of different volumes to allow for a differing rate of dispensing of the DCM powder. However, as can be further appreciated by the configuration of the system 300, it is important that the distance from the bottom of the vacuum ring 350 to the top of the mouth of the flask 320 be as small as possible without impeding the ability of the rotatable carousel 304 to rotate due to, for example, contact between the flask 320 and the vacuum ring 350. Therefore, it is important that the heights of the different volume cylinders 328 to be the same or substantially the same. Accordingly, as shown in more detail in FIGS. 12A-12C, the cylinder 328 can have different shapes such as cylinders 328-1, 328-2 and 328-3, so that these different cylinders 328 through 328-3 can have different volumes while having the same height.

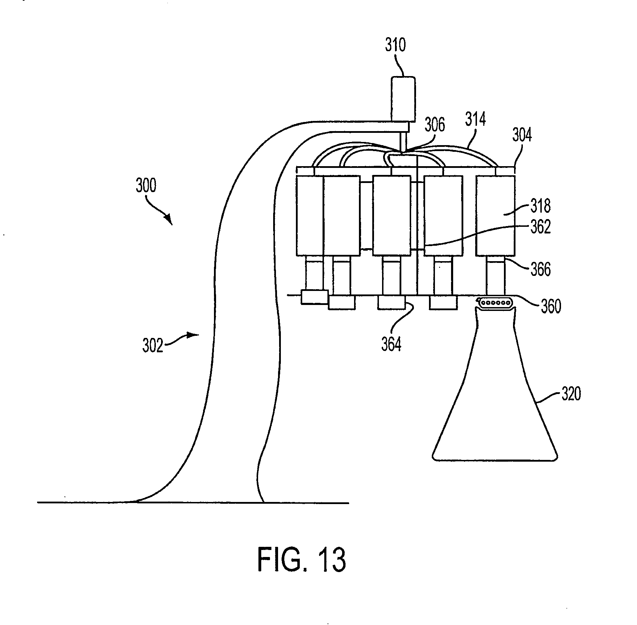

It should be further noted that the cylinder 328 alternatively may be either an integral part of, or an attachment to, the disposable container 318 or the flask 320. In addition, as shown in FIG. 13, instead of the cylinder 328 coupling to the disposable container 318, the system 300 can include a second rotatable carousel 360 that rotatably couples to the pivot point 308 via a shaft 362, for example, and includes openings 364 that receive different volume cylinders, such as cylinders 328 through 328-3. In this arrangement, a shorter cylinder or adapter 366 having a valve 368 therein that can be opened manually or automatically can be coupled to the bottom opening 326 in the disposable container 318. The different volume cylinders 328 through 328-3 in the rotatable carousel 360 can thus be selectively rotated below the containers 318 so that the desired different volumes of DCM powder can be dispensed into the flask 320 as desired.

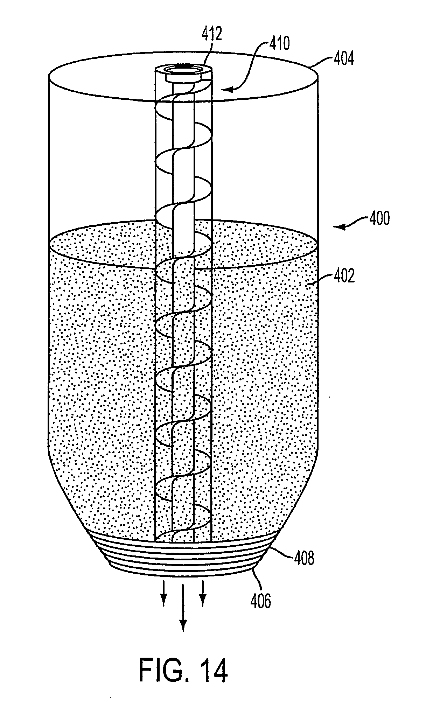

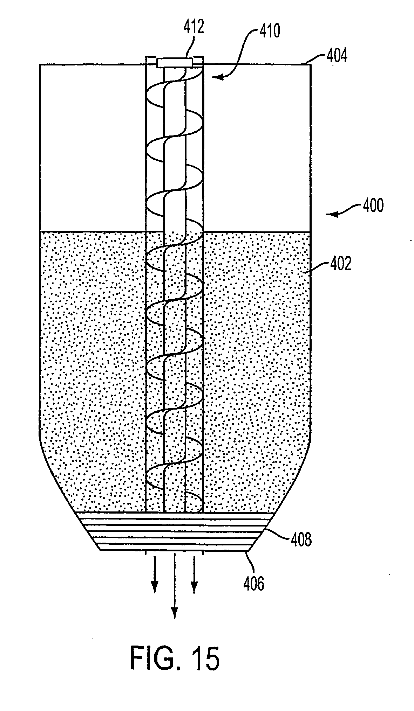

In addition, as shown in FIGs. 14-17, a second example not in accordance with the invention further provides a container 400 that is adaptable for use with any of the configurations or apparatus discussed above. Specifically, the container 400 stores a suitable amount of DCM power 402 in this example, but can be adapted to store any type of material, in particular, granular or powdered material.

The container 400 further includes a top portion 404 and a bottom opening 406. The top portion 404 can be an integral part of the container that is permanently sealed, or can be screwed or snap fit onto the remainder of the container 400 and thus removable from container 400. Alternatively, the top portion 404 can have an opening therein (not shown) that can be covered by, for example, a removable cap or membrane for refilling of DCM powder. The opening 406 can also be covered by a cap or removable or rupturable membrane as discussed above, or by any other suitable device for preventing the undesired leakage of the contents of the container 400.

hi addition, for identification purposes, the container 400 can be coded with a color or other indicator representing the contents of the container 400. For instance, this identification can be a color coding (e.g., red, green, blue, etc.) that is present on portions or the entirety of the container 400, a type of indicia (e.g., numbers, letters or alphanumeric symbols) on the container 400 representing the content of the container 400, and/or a bar code representing the content of the container 400. Various safety warnings and other relevant information can also be present on the container 400. Also, the container 400 can be made of any suitable material, such as plastic or various polymers, and can be opaque, or can be translucent so that a technician can readily determine the amount of DCM powder remaining in the container. Furthermore, the mouth of the container 400 is tapered or conical in shape towards the opening 406 so as to allow the DCM powder or other material contained therein to readily flow from the container 400 when the container 400 is set in an upside down position, and includes threads 408 for mating with any of the apparatus discussed above.

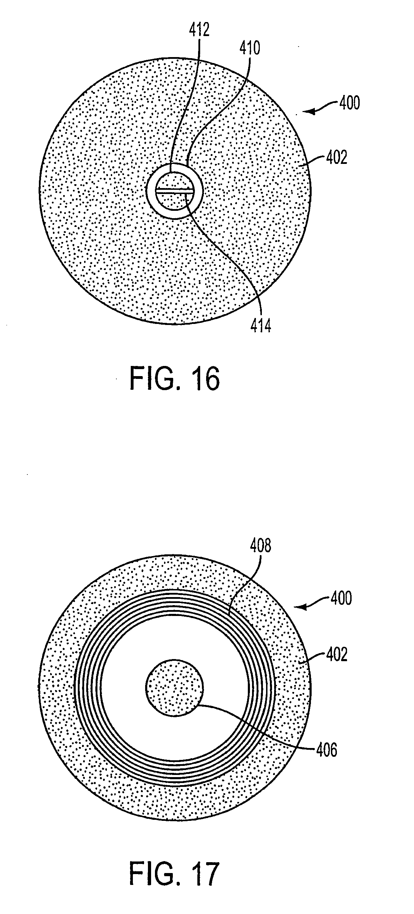

As further illustrated, the container 400 includes a device 410 for facilitating movement of the material in the container 400 toward the opening 406. In this example, the device 410 is an auger or auger-like apparatus. The device 410 can be made of any suitable material, such as that of the container, or any other material such as metal, stainless steel and so on. The device 410 includes a bushing 412 that rotatably secures one end of the device 410 to the top portion 404 as shown in more detail in Fig. 16. The other end of the device 410 is rotatably secured to the opening 406 as shown in more detail in FIG. 17, so that the other end of the device 410 is exposed to the opening 406 and thus, the device 410 can facilitate movement of DCM powder or other contents of the container 400 through the opening.

The device 410 is calibrated so that each rotation will result in a predetermined volume of DCM powder (or other contents) being dispensed from the opening 406. As shown in FIGs. 16 and 17, the bushing 412 or end of the device 412 can include a mating portion 414 that can be, for example, a projection or slot for mating with a device, such as a shaft 422 of a motor 420, that can be manually or automatically controlled (e.g., by a computer) to rotate the device 410 at a desired rate of rotation or by a desired number of rotations or partial number of rotations. The container 400 can be attached to the motor 420 by snap-fitting, screwing, clamping or in any other suitable fashion that allows for easy connection to and removal from the motor 420. In another configuration, the motor 420 can be integral with the container 400 or connected to the container 400 as unit. Alternatively, a user can grab the mating portion 414 with his or her fingers, for example, or use any suitable type of manual device, such as a screwdriver, crank or handle, to manually rotate the device 410 at a desired rate or by a desired number of rotations or partial number of rotations.

Accordingly, the container 400 allows for dustless or essentially dustless disbursement of DCM power or other material when the container 400 is coupled to any of the apparatus discussed above.

While this invention has been particularly shown and described with reference to preferred embodiments thereof, the preferred embodiments described above are merely illustrative and are not intended to limit the scope of the invention. It will be understood by those skilled in the art that various changes in form and details may be made therein without departing from the scope of the invention as defined by the claims.

## Claims

1. A dehydrated culture media (DCM) powder container system, comprising:
a container portion (120; 318; 400), configured to contain dehydrated culture media powder, the container portion having:
a plurality of sides that are each flat on their respective surface that forms an external surface of the container portion so as to form a section of the container portion as having a square or rectangular external shape;
a solid top, the entirety of which being integral with and non-removable from the sides and having no opening therein, and at least a portion of an external surface of the solid top that is external of the container portion is flat; and
a tapered portion having an opening (406) therein that is positioned at an end of the container portion opposite to an end of the container portion having the top, the plurality of sides are integral with the tapered portion, and the tapered portion is configured such that an inner surface of the tapered portion, which is internal to the container portion, is conical having its largest internal diameter at a location at which the tapered portion joins the sides of the section and an internal diameter which continuously decreases in a direction from the location of the largest diameter to the opening in the tapered portion, an and outer surface of the tapered portion, which is external to the container portion, is conical having its largest external diameter at a location at which the tapered portion joins the sides of the section and an external diameter which continuously decreases in a direction from the location of the largest diameter to the opening in the tapered portion, such that the tapered portion has a size and shape for coupling directly or indirectly to a vessel; and
a cap (122), which removably mates with the container portion (120; 318; 400) to seal the opening (406), such that the cap (122) has a portion which extends over the tapered portion when the cap removably mates with the container portion, and the cap is removed to enable the tapered portion to couple directly or indirectly to the vessel to create a closed system and permit the dehydrated culture media powder to flow through the opening into the vessel while eliminating dehydrated culture media dust formation outside of the vessel, and at least a portion of the top surface of the cap (122) is flat to enable stacking of a plurality of dehydrated culture media powder containers atop each other vertically.

2. A dehydrated culture media powder container system as claimed in claim 1, wherein:
at least one of the cap (122) and the container portion (120; 318; 400) includes identifying marking that identifies a type of dehydrated culture media powder in the container.

3. A dehydrated culture media powder container system as claimed in claim 1, wherein:
the cap (122) is adapted to removably snap-fit onto the container portion (120; 318; 400).

4. A dehydrated culture media powder container system as claimed in claim 1, wherein:
the cap (122) and container portion (120; 318; 400) contain threads (121, 123), such that the cap (122) is adapted to screw onto the container portion (120; 318; 400).

5. A dehydrated culture media powder container system as claimed in claim 1, wherein:
the container portion (120; 318; 400) further comprises a rupturable membrane covering the opening (406), the rupturable membrane being covered by the cap (122) when the cap mates with the container portion (120; 318; 400) and exposed when the cap (122) is removed from the container portion (120; 318; 400), and further adapted to rupture when pressure is applied thereto or to the container portion (120; 318; 400).

6. A dehydrated culture media powder container system as claimed in claim 1, further comprising:
an adapter (125), adapted to couple between the container portion (120; 318; 400) and the vessel, to couple the container portion (120; 318; 400) indirectly to the vessel to create a closed system and permit the dehydrated culture media powder to flow through the opening in the container portion (120; 318; 400) through the adapter (125) and into the vessel while eliminating dehydrated culture media dust formation outside of the vessel.

7. A dehydrated culture media powder container system as claimed in claim 6, wherein:
the container portion (120; 318; 400) further comprises a rupturable membrane covering the opening (406) and exposed when the cap (122) is removed from the container portion (120; 318; 400), and the adapter (125) further comprises a puncturing member, adapted to puncture the rupturable membrane when the container portion (120; 318; 400) is coupled to the adapter (125).

8. A dehydrated culture media powder container system as claimed in claim 6, wherein:
the container portion (120; 318; 400) includes threads (123); and the adapter (125) includes threads (133), such that the container portion (120; 318; 400) is adapted to screw onto the adapter (125) and the adapter (125) is adapted to screw onto the vessel.

9. A dehydrated culture media powder container system as claimed in claim 8, wherein:
the threads (121, 123) on the container portion (120; 318; 400) are on at least one of the interior and exterior of the container portion (120; 318; 400); and the threads (129, 133) on the adapter (125) are on at least one of the interior and exterior of the adapter (125), and proximate to one or both ends of the adapter (125).

10. A dehydrated culture media powder container system as claimed in claim 1, further comprising:
a valve (102, 146) that is adapted to indirectly couple the container portion (120; 318; 400) to the vessel and is operable to dispense the dehydrated culture media powder from the container portion (120; 318; 400) into the vessel.

11. A dehydrated culture media powder container system as claimed in claim 1, wherein the tapered portion forms a conic shape inside the container portion (120; 318; 400) to direct the dehydrated culture media powder toward the opening (406).

12. A dehydrated culture media powder container system as claimed in claim 11, wherein:
the opening (406) is at a center of an end of the container portion (120; 318; 400).

13. A dehydrated culture media powder container system as claimed in claim 1, wherein:
the top surface of the cap (122) is substantially flat and an end of the container portion (120; 318; 400) opposite to that at which the cap mates to the container portion is substantially flat, to enable stacking of a plurality of dehydrated culture media powder containers atop each other vertically.

14. A dehydrated culture media powder container system as claimed in claim 1, wherein:
an exterior surface of the container portion (120; 318; 400) is configured to remain exposed to the same external atmosphere as an exterior surface of the vessel when the tapered portion couples directly or indirectly to the vessel to create the closed system and permit the dehydrated culture media powder to flow through the opening into the vessel while eliminating dehydrated culture media dust formation in the external atmosphere outside of the vessel.

15. A dehydrated culture media powder container system as claimed in claim 1, wherein:
the container portion (120; 318; 400) is configured to maintain the dehydrated culture media powder in a dry state while the dehydrated culture media powder flows through the opening (406) into the vessel.

16. A dehydrated culture media powder container system as claimed in claim 1, wherein:
the vessel is a media preparation instrument and the container portion (120; 318; 400) is configured to remain outside of the media preparation instrument while the dehydrated culture media powder flows through the opening (406) into the media preparation instrument.

17. A dehydrated culture media powder container system as claimed in claim 1, wherein:
all of the container portion (120; 318; 400) is made of the same material and the opening (406) is formed at only one end of the container portion (120; 318; 400).

18. A dehydrated culture media powder container system as claimed in claim 2, wherein the cap (122) and the container portion (120; 318; 400) includes identifying marking that identifies a type of dehydrated culture media powder in the container.

19. A dehydrated culture media powder container system as claimed in claim 1, wherein the portion of the cap which extends over the tapered portion when the cap removably mates with the container portion has a square external shape when used with a container portion whose section has a square shape and has a rectangular external shape when used with a container portion whose section has a rectangular shape, such that each side of the cap which aligns with a corresponding side of the section of the container portion when the cap is mated with the container portion.

## Patentansprüche

1. Behältersystem für Pulver von dehydrierten Kulturmedien (Dehydrated Culture Media, DCM), das umfasst:
einen Behälterabschnitt (120; 318; 400), der ausgeführt ist, um Pulver von dehydrierten Kulturmedien zu enthalten, wobei der Behälterabschnitt aufweist:
mehrere Seiten, die jeweils flach auf ihrer jeweiligen Fläche sind, welche eine Außenfläche des Behälterabschnitts bildet, um einen Teilabschnitt des Behälterabschnitts so zu bilden, dass er eine quadratische oder rechteckige äußere Form aufweist;
ein festes Oberteil, das in seiner Gesamtheit einstückig mit und nicht abnehmbar von den Seiten ist und keine Öffnung darin aufweist, und mindestens ein Abschnitt einer Außenfläche des festen Oberteils, die außerhalb des Behälterabschnitts ist, flach ist; und
einen verjüngten Abschnitt mit einer Öffnung (406) darin, der an einem Ende des Behälterabschnitts gegenüber einem Ende des Behälterabschnitts mit dem Oberteil positioniert ist, die mehreren Seiten einstückig mit dem verjüngten Abschnitt sind und der verjüngte Abschnitt so ausgeführt ist, dass eine Innenfläche des verjüngten Abschnitts, die im Behälterabschnitt innen ist, konisch ist und ihren größten Innendurchmesser an einer Stelle hat, an welcher der verjüngte Abschnitt an den Seiten des Teilabschnitts angefügt ist, und einen Innendurchmesser, der in einer Richtung von der Stelle des größten Durchmessers hin zur Öffnung im verjüngten Abschnitt kontinuierlich abnimmt, und eine Außenfläche des verjüngten Abschnitts, die außerhalb des Behälterabschnitts ist, konisch ist und ihren größten Außendurchmesser an einer Stelle hat, an welcher der verjüngte Abschnitt an den Seiten des Teilabschnitts angefügt ist, und einen Außendurchmesser, der in einer Richtung von der Stelle des größten Durchmessers hin zur Öffnung im verjüngten Abschnitt kontinuierlich abnimmt, so dass der verjüngte Abschnitt eine Größe und Form für eine direkte oder indirekte Kopplung an ein Gefäß hat; und
einen Aufsatz (122), der abnehmbar am Behälterabschnitt (120; 318; 400) passgenau anliegt, um die Öffnung (406) abzudichten, so dass der Aufsatz (122) einen Abschnitt aufweist, der sich über dem verjüngten Abschnitt erstreckt, wenn der Aufsatz abnehmbar am Behälterabschnitt passgenau anliegt, und der Aufsatz abgenommen wird, um zu ermöglichen, dass der verjüngte Abschnitt direkt oder indirekt an das Gefäß gekoppelt wird, um ein geschlossenes System herzustellen und zuzulassen, dass das Pulver von dehydrierten Kulturmedien durch die Öffnung in das Gefäß fließt, während die Bildung von Staub von dehydrierten Kulturmedien außerhalb des Gefäßes eliminiert wird, und mindestens ein Abschnitt der Oberfläche des Aufsatzes (122) flach ist, um die Stapelung mehrerer Behälter für Pulver von dehydrierten Kulturmedien vertikal übereinander zu ermöglichen.

2. Behältersystem für Pulver von dehydrierten Kulturmedien gemäß Anspruch 1, wobei:
der Aufsatz (122) und/oder der Behälterabschnitt (120; 318; 400) das Identifizieren einer Markierung umfasst, die eine Art von Pulver von dehydrierten Kulturmedien im Behälter identifiziert.

3. Behältersystem für Pulver von dehydrierten Kulturmedien gemäß Anspruch 1, wobei:
der Aufsatz (122) ausgebildet ist, um abnehmbar auf dem Behälterabschnitt (120; 318; 400) einzurasten.

4. Behältersystem für Pulver von dehydrierten Kulturmedien gemäß Anspruch 1, wobei:
der Aufsatz (122) und der Behälterabschnitt (120; 318; 400) Gewinde (121, 123) enthalten, so dass der Aufsatz (122) ausgebildet ist, um auf den Behälterabschnitt (120; 318; 400) geschraubt zu werden.

5. Behältersystem für Pulver von dehydrierten Kulturmedien gemäß Anspruch 1, wobei:
der Behälterabschnitt (120; 318; 400) ferner eine zerreißbare Membran umfasst, welche die Öffnung (406) bedeckt, wobei die zerreißbare Membran vom Aufsatz (122) bedeckt wird, wenn der Aufsatz am Behälterabschnitt (120; 318; 400) passgenau anliegt, und exponiert wird, wenn der Aufsatz (122) vom Behälterabschnitt (120; 318; 400) abgenommen wird, und ferner ausgebildet ist, um zu zerreißen, wenn Druck darauf oder auf den Behälterabschnitt (120; 318; 400) ausgeübt wird.

6. Behältersystem für Pulver von dehydrierten Kulturmedien gemäß Anspruch 1, das ferner umfasst:
ein Übergangsstück (125), das zum Koppeln zwischen dem Behälterabschnitt (120; 318; 400) und dem Gefäß ausgebildet ist, um den Behälterabschnitt (120; 318; 400) indirekt an das Gefäß zu koppeln, um ein geschlossenes System herzustellen und zuzulassen, dass das Pulver von dehydrierten Kulturmedien durch die Öffnung im Behälterabschnitt (120; 318; 400) durch das Übergangsstück (125) und in das Gefäß fließt, während die Bildung von Staub von dehydrierten Kulturmedien außerhalb des Gefäßes eliminiert wird.

7. Behältersystem für Pulver von dehydrierten Kulturmedien gemäß Anspruch 6, wobei:
der Behälterabschnitt (120; 318; 400) ferner eine zerreißbare Membran umfasst, welche die Öffnung (406) bedeckt und exponiert wird, wenn der Aufsatz (122) vom Behälterabschnitt (120; 318; 400) abgenommen wird, und das Übergangsstück (125) ferner ein Durchstechglied umfasst, das ausgebildet ist, um die zerreißbare Membran zu durchstechen, wenn der Behälterabschnitt (120; 318; 400) an das Übergangsstück (125) gekoppelt wird.

8. Behältersystem für Pulver von dehydrierten Kulturmedien gemäß Anspruch 6, wobei:
der Behälterabschnitt (120; 318; 400) Gewinde (123) enthält; und das Übergangsstück (125) Gewinde (133) enthält, so dass der Behälterabschnitt (120; 318; 400) ausgebildet ist, um auf das Übergangsstück (125) geschraubt zu werden, und das Übergangsstück (125) ausgebildet ist, um auf das Gefäß geschraubt zu werden.

9. Behältersystem für Pulver von dehydrierten Kulturmedien gemäß Anspruch 8, wobei:
die Gewinde (121, 123) am Behälterabschnitt (120; 318; 400) an der Innen- und/oder der Außenseite des Behälterabschnitts (120; 318; 400) sind; und die Gewinde (129, 133) am Übergangsstück (125) an der Innen- und/oder der Außenseite des Übergangsstücks (125) sind und nahe einem oder beiden Enden des Übergangsstücks (125).

10. Behältersystem für Pulver von dehydrierten Kulturmedien gemäß Anspruch 1, das ferner umfasst:
ein Ventil (102, 146), das ausgebildet ist, um den Behälterabschnitt (120; 318; 400) indirekt an das Gefäß zu koppeln, und bedienbar ist, um das Pulver von dehydrierten Kulturmedien aus dem Behälterabschnitt (120; 318; 400) in das Gefäß auszugeben.

11. Behältersystem für Pulver von dehydrierten Kulturmedien gemäß Anspruch 1, wobei der verjüngte Abschnitt eine konische Form innerhalb des Behälterabschnitts (120; 318; 400) bildet, um das Pulver von dehydrierten Kulturmedien zur Öffnung (406) hin zu leiten.

12. Behältersystem für Pulver von dehydrierten Kulturmedien gemäß Anspruch 11, wobei:
die Öffnung (406) in einer Mitte eines Endes des Behälterabschnitts (120; 318; 400) ist.

13. Behältersystem für Pulver von dehydrierten Kulturmedien gemäß Anspruch 1, wobei:
die Oberfläche des Aufsatzes (122) im Wesentlichen flach ist und ein Ende des Behälterabschnitts (120; 318; 400) gegenüber dem, an welchem der Aufsatz am Behälterabschnitt passgenau anliegt, im Wesentlichen flach ist, um die Stapelung mehrerer Behälter für Pulver von dehydrierten Kulturmedien vertikal übereinander zu ermöglichen.

14. Behältersystem für Pulver von dehydrierten Kulturmedien gemäß Anspruch 1, wobei:
eine Außenfläche des Behälterabschnitts (120; 318; 400) ausgeführt ist, um derselben Außenatmosphäre wie eine Außenfläche des Gefäßes ausgesetzt zu bleiben, wenn der verjüngte Abschnitt direkt oder indirekt an das Gefäß gekoppelt wird, um das geschlossene System herzustellen und zuzulassen, dass das Pulver von dehydrierten Kulturmedien durch die Öffnung in das Gefäß fließt, während die Bildung von Staub von dehydrierten Kulturmedien in der Außenatmosphäre außerhalb des Gefäßes eliminiert wird.

15. Behältersystem für Pulver von dehydrierten Kulturmedien gemäß Anspruch 1, wobei:
der Behälterabschnitt (120; 318; 400) ausgeführt ist, um das Pulver von dehydrierten Kulturmedien in trockenem Zustand zu halten, während das Pulver von dehydrierten Kulturmedien durch die Öffnung (406) in das Gefäß fließt.

16. Behältersystem für Pulver von dehydrierten Kulturmedien gemäß Anspruch 1, wobei:
das Gefäß ein Medienpräparationsinstrument ist und der Behälterabschnitt (120; 318; 400) ausgeführt ist, um außerhalb des Medienpräparationsinstruments zu bleiben, während das Pulver von dehydrierten Kulturmedien durch die Öffnung (406) in das Medienpräparationsinstrument fließt.

17. Behältersystem für Pulver von dehydrierten Kulturmedien gemäß Anspruch 1, wobei:
der gesamte Behälterabschnitt (120; 318; 400) aus demselben Material hergestellt ist und die Öffnung (406) an nur einem Ende des Behälterabschnitts (120; 318; 400) gebildet wird.

18. Behältersystem für Pulver von dehydrierten Kulturmedien gemäß Anspruch 2, wobei der Aufsatz (122) und der Behälterabschnitt (120; 318; 400) das Identifizieren einer Markierung umfasst, die eine Art von Pulver von dehydrierten Kulturmedien im Behälter identifiziert.

19. Behältersystem für Pulver von dehydrierten Kulturmedien gemäß Anspruch 1, wobei der Abschnitt des Aufsatzes, der sich über dem verjüngten Abschnitt erstreckt, wenn der Aufsatz abnehmbar an dem Behälterabschnitt passgenau anliegt, eine quadratische äußere Form hat, wenn er mit einem Behälterabschnitt verwendet wird, dessen Teilabschnitt eine quadratische Form hat, und eine rechteckige äußere Form hat, wenn er mit einem Behälterabschnitt verwendet wird, dessen Teilabschnitt eine rechteckige Form hat, so dass jede Seite des Aufsatzes, die an einer entsprechenden Seite des Teilabschnitts des Behälterabschnitts ausgerichtet ist, wenn der Aufsatz am Behälterabschnitt passgenau anliegt.

## Revendications

1. Un système de conteneur de milieu de culture déshydraté (DCM) en poudre, comprenant :
une partie conteneur (120, 318, 400) configurée de façon à contenir un milieu de culture déshydraté en poudre, la partie conteneur possédant :
une pluralité de côtés qui sont chacun plats sur leur surface respective qui forme une surface externe de la partie conteneur de façon à former une section de la partie conteneur présentant une forme externe carrée ou rectangulaire,
une partie supérieure monobloc, dont la totalité est d'un seul tenant avec et non amovible des côtés et ne possédant aucune ouverture, et au moins une partie d'une surface externe de la partie supérieure monobloc qui est externe à la partie conteneur est plane, et
une partie effilée possédant une ouverture (406) qui est placée à une extrémité de la partie conteneur à l'opposé d'une extrémité de la partie conteneur possédant la partie supérieure, la pluralité des côtés est d'un seul tenant avec la partie effilée et la partie effilée est configurée de sorte qu'une surface intérieure de la partie effilée, qui est interne à la partie conteneur, soit conique avec son diamètre externe le plus grand à un emplacement auquel la partie effilée rejoint les côtés de la section et un diamètre interne qui décroît de manière continue dans une direction allant de l'emplacement du diamètre le plus grand à l'ouverture dans la partie effilée, et une surface extérieure de la partie effilée, qui est externe à la partie conteneur, est conique avec son diamètre externe le plus grand à un emplacement auquel la partie effilée rejoint les côtés de la section et un diamètre externe qui décroît de manière continue dans une direction allant de l'emplacement du diamètre le plus grand à l'ouverture dans la partie effilée, de sorte que la partie effilée possède une taille et une forme permettant de se coupler directement ou indirectement à un récipient, et
un couvercle (122), qui s'accouple de manière amovible avec la partie conteneur (120, 318, 400) de façon à sceller l'ouverture (406), de sorte que le couvercle (122) ait une partie qui s'étende sur la partie effilée lorsque le couvercle s'accouple de manière amovible avec la partie conteneur, et le couvercle est retiré de façon à permettre à la partie effilée de se coupler directement ou indirectement au récipient de façon à créer un système fermé et à permettre au milieu de culture déshydraté en poudre de s'écouler par l'ouverture dans le récipient tout en éliminant la formation de poussières de milieu de culture déshydraté à l'extérieur du récipient, et au moins une partie de la surface supérieure du couvercle (122) est plane de façon à permettre l'empilement d'une pluralité de conteneurs de milieu de culture déshydraté en poudre l'un sur l'autre de manière verticale.

2. Un système de conteneur de milieu de culture déshydraté en poudre selon la Revendication 1, où :
au moins un élément parmi le couvercle (122) et la partie conteneur (120, 318, 400) comprend un marquage d'identification qui identifie un type de milieu de culture déshydraté en poudre dans le conteneur.

3. Un système de conteneur de milieu de culture déshydraté en poudre selon la Revendication 1, où :
le couvercle (122) est adapté de façon à s'emboîter par pression de manière amovible sur la partie conteneur (120, 318, 400).

4. Un système de conteneur de milieu de culture déshydraté en poudre selon la Revendication 1, où :
le couvercle (122) et la partie conteneur (120, 318, 400) comprennent des filets (121, 123), de sorte que le couvercle (122) soit adapté de façon à se visser sur la partie conteneur (120, 318, 400).

5. Un système de conteneur de milieu de culture déshydraté en poudre selon la Revendication 1, où :
la partie conteneur (120, 318, 400) comprend en outre une membrane perforable recouvrant l'ouverture (406), la membrane perforable étant recouverte par le couvercle (122) lorsque le couvercle s'accouple avec la partie conteneur (120, 318, 400) et est exposée lorsque le couvercle (122) est retiré de la partie conteneur (120, 318, 400) et est adaptée en outre de façon à se perforer lorsqu'une pression est appliquée sur celle-ci ou sur la partie conteneur (120, 318, 400).

6. Un système de conteneur de milieu de culture déshydraté en poudre selon la Revendication 1, comprenant en outre :
un adaptateur (125), adapté de façon à se coupler entre la partie conteneur (120, 318, 400) et le récipient, de façon à coupler la partie conteneur (120, 318, 400) indirectement au récipient de façon à créer un système fermé et à permettre au milieu de culture déshydraté en poudre de s'écouler par l'ouverture dans la partie conteneur (120, 318, 400) par l'adaptateur (125) et dans le récipient tout en supprimant la formation de poussières de milieu de culture déshydraté à l'extérieur du récipient.

7. Un système de conteneur de milieu de culture déshydraté en poudre selon la Revendication 6, où :
la partie conteneur (120, 318, 400) comprend en outre une membrane perforable recouvrant l'ouverture (406) et exposée lorsque le couvercle (122) est retiré de la partie conteneur (120, 318, 400), et l'adaptateur (125) comprend en outre un élément de perforation, adapté de façon à perforer la membrane perforable lorsque la partie conteneur (120, 318, 400) est couplée à l'adaptateur (125).

8. Un système de conteneur de milieu de culture déshydraté en poudre selon la Revendication 6, où :
la partie conteneur (120, 318, 400) comprend des filets (123), et l'adaptateur (125) comprend des filets (133), de sorte que la partie conteneur (120, 318, 400) soit adaptée de façon à se visser sur l'adaptateur (125) et l'adaptateur (125) est adapté de façon à se visser sur le récipient.

9. Un système de conteneur de milieu de culture déshydraté en poudre selon la Revendication 8, où :
les filets (121, 123) sur la partie conteneur (120, 318, 400) se trouvent sur au moins un élément parmi l'intérieur ou l'extérieur de la partie conteneur (120, 318, 400), et les filets (129, 133) sur l'adaptateur (125) se trouvent sur au moins un élément parmi l'intérieur ou l'extérieur de l'adaptateur (125), et à proximité de l'une ou les deux extrémités de l'adaptateur (125).

10. Un système de conteneur de milieu de culture déshydraté en poudre selon la Revendication 1, comprenant en outre :
une soupape (102, 146) qui est adaptée de façon à coupler indirectement la partie conteneur (120, 318, 400) au récipient et qui est actionnable de façon à distribuer le milieu de culture déshydraté en poudre de la partie conteneur (120, 318, 400) vers le récipient.

11. Un système de conteneur de milieu de culture déshydraté en poudre selon la Revendication 1, où la partie effilée forme une forme conique à l'intérieur de la partie conteneur (120, 318, 400) de façon à diriger le milieu de culture déshydraté en poudre vers l'ouverture (406).

12. Un système de conteneur de milieu de culture déshydraté en poudre selon la Revendication 11, où
l'ouverture (406) est située au centre d'une extrémité de la partie conteneur (120, 318, 400).

13. Un système de conteneur de milieu de culture déshydraté en poudre selon la Revendication 1, où
la surface supérieure du couvercle (122) est sensiblement plane et une extrémité de la partie conteneur (120, 318, 400) à l'opposé de celle avec laquelle le couvercle s'accouple à la partie conteneur est sensiblement plane, de façon à permettre l'empilement d'une pluralité de conteneurs de milieu de culture déshydraté en poudre l'un sur l'autre de manière verticale.

14. Un système de conteneur de milieu de culture déshydraté en poudre selon la Revendication 1, où
une surface extérieure de la partie conteneur (120, 318, 400) est configurée de façon à rester exposée à la même atmosphère externe qu'une surface extérieure du récipient lorsque la partie effilée se couple directement ou indirectement au récipient de façon à créer le système fermé et à permettre au milieu de culture déshydraté en poudre de s'écouler par l'ouverture dans le récipient tout en éliminant la formation de poussières de milieu de culture déshydraté dans l'atmosphère externe à l'extérieur du récipient.

15. Un système de conteneur de milieu de culture déshydraté en poudre selon la Revendication 1, où
la partie conteneur (120, 318, 400) est configurée de façon à maintenir le milieu de culture déshydraté en poudre dans un état sec pendant que le milieu de culture déshydraté en poudre s'écoule par l'ouverture (406) dans le récipient.

16. Un système de conteneur de milieu de culture déshydraté en poudre selon la Revendication 1, où
le récipient est un instrument de préparation de milieu et la partie conteneur (120, 318, 400) est configurée de façon à rester à l'extérieur de l'instrument de préparation de milieu pendant que le milieu de culture déshydraté en poudre s'écoule par l'ouverture (406) dans l'instrument de préparation de milieu.

17. Un système de conteneur de milieu de culture déshydraté en poudre selon la Revendication 1, où
la totalité de la partie conteneur (120, 318, 400) est fabriquée dans le même matériau et l'ouverture (406) est formée à seulement une extrémité de la partie conteneur (120, 318, 400).

18. Un système de conteneur de milieu de culture déshydraté en poudre selon la Revendication 2, où le couvercle (122) et la partie conteneur (120, 318, 400) comprennent un marquage d'identification qui identifie un type de milieu de culture déshydraté en poudre dans le conteneur.

19. Un système de conteneur de milieu de culture déshydraté en poudre selon la Revendication 1, où la partie du couvercle qui s'étend sur la partie effilée lorsque le couvercle s'accouple de manière amovible avec la partie conteneur possède une forme externe carrée lorsqu'elle est utilisée avec une partie conteneur dont la section possède une forme carrée et possède une forme externe rectangulaire lorsqu'elle est utilisée avec une partie conteneur dont la section possède une forme rectangulaire, de sorte que chaque côté du couvercle s'aligne avec un côté correspondant de la section de la partie conteneur lorsque le couvercle est accouplé avec la partie conteneur.
